# EUROPEAN PATENT SPECIFICATION

(11) **EP 2 541 081 B1**
(45) Date of publication and mention of the grant of the patent: **10.06.2015**
(21) Application number: 12172872.9
(22) Date of filing: 21.06.2012
(51) Int. Cl.: F16C 9/02, F16C 17/02, F16C 33/04

(54) **Sleeve bearing with shell portions of unequal extent**
Gleitlager mit Schalenabschnitten ungleichen Ausmaßes
Coussinet lisse avec coquilles d'extension differente

(30) Priority: 30.06.2011 US 201161503449 P; 01.05.2012 US 201213461453
(43) Date of publication of application: 02.01.2013
(73) Proprietor: CATERPILLAR INC., Peoria IL 61629-6490 (US)
(72) Inventor: Shaffer, Bradley J., Romney, IN Indiana 47981 (US)
(74) Representative: Kramer Barske Schmidtchen Patentanwälte PartG mbB

(56) References cited:
- US-A- 5 203 854
- US-A- 5 287 623

## Description

### Technical Field

The present disclosure relates generally to engine bearings, and more particularly to an internal combustion engine that employs main sleeve bearings and other bearings having bearing shell portions of unequal extents to support a crankshaft or other rotating journal.

### Background

Engine main and connecting rod sleeve bearings in internal combustion engines are subjected to repetitive loads which can ultimately fatigue the bearing. The bearings are disposed in a continuously circulated oil bath and a clearance is provided between the outer peripheral surface of the journal member or crankshaft and the inner peripheral bearing surface of the sleeve bearing. This facilitates relative rotation between the parts during normal engine operation and facilitates the creation of an oil film between the parts which acts as a load supporting medium during engine operation. The hydrodynamic wedge effect of the oil causes the shaft or journal member to float on an oil film as a result of there being a difference between the shaft radius and the bearing radius, i.e., a clearance. The oil in the clearance provides lubrication and cooling.

Engine main sleeve bearings, such as split-half bearings, are conventionally constructed in two parts i.e., two bearing half shells. Together, the bearing half shells form the sleeve bearing. Examples of main sleeve bearings are provided by U.S. Pat. No. 4,854,746 to Baugh et al. and U.S. Pat. No. 5,203,854 to Nilsson et al. The main sleeve bearings in each of these reference patents are formed by upper and lower bearing half shells having equal extents, i.e. each forming 180° of the circumference of the main sleeve bearings. The bearing half shells in the references may have differing geometries at their inner and outer surfaces to achieve the goals of the inventions as stated in the patents, but each forms one-half of the complete sleeve bearing.

In typical assembly processes, the bearing half shells are preliminarily mounted in a crankcase, prior to insertion of the crankshaft, such that one half shell is positioned in the upper half of the crankcase (engine block portion) and the other half shell is positioned in the lower half of the crankcase (bearing cap or cover portion). When the engine block portion and the bearing cap portions are tightened, the ends of the half bearings are pushed together or force fit, and the bearings are forced into a bearing bore. Such force fit is usually referred to as a "bearing crush." Because minimal lateral forces are exerted on the surfaces of the bearing half shells that engage at a parting line during bearing crush, the engaging surfaces generally remain aligned. The parting line refers to the area where the two bearing halves join together. However, it is still possible for the bearing half shells to become misaligned at the parting line due to the compressive forces acting on the bearing half shells. Sharp edges can result from such misalignment, and the discontinuous surface may remove or scrape off lubricants from the rotating crankshaft.

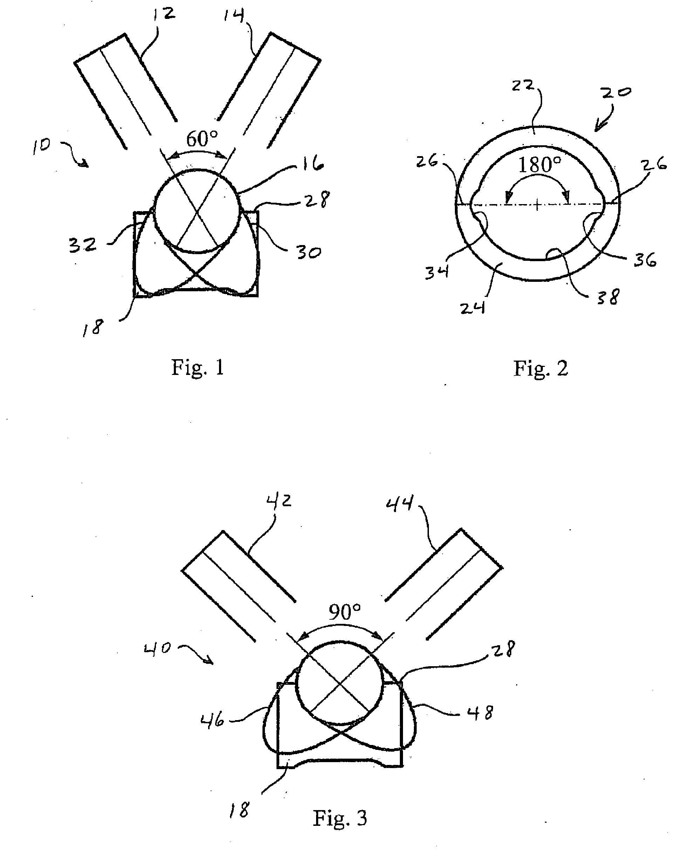

A typical engine block has two angled banks of piston cylinders configured in a V-shape. The usual engine block configuration is a 60° V. Fig. 1 schematically illustrates a 60° V engine block 10 wherein a first piston bank 12 and a second piston bank 14 form an angle of approximately 60° there between. A journal or crankshaft 16 is mounted to the crankcase (not shown) with lower bearing caps 18 securing the crankshaft 16 at least at either end. A currently known main sleeve bearing 20, such as that shown in Fig. 2, may have an upper bearing half shell 22 and a lower bearing half shell 24 having equal extents of 180° of the main sleeve bearing 20. The main sleeve bearing 20 may be disposed around the crankshaft 16 of Fig. 1. A parting line 26 between the bearing half shells 22, 24 is typically aligned with a parting line 28 between the crankcase and the lower bearing cap 18.

Main loads 30, 32 on the crankshafts 16 and the main sleeve bearings 20 caused by the firing of the pistons of the piston banks 12, 14, respectively, generally act below the parting lines 26, 28 of the bearing half shells 22, 24 and lower bearing cap 18, respectively. To reduce the scraping off of lubricants as discussed above caused by the misalignment between the bearing half shells 22, 24, the thickness of the bearing half shells 22, 24 is reduced proximate the bearing parting line 26 to create side relief pockets 34, 36 in an inner surface 38 of the main sleeve bearing 20. The side relief pockets 34, 36 can prevent sharp edges from being raised by the bearing crush installation procedure in a manner that would scrape off the lubricant.

The removal of material to create the side relief pockets 34, 36 at the parting line 26 reduces the load carrying ability of the main sleeve bearing 20 over the extent of the side relief feature. In 60° V engine blocks 10, with the main forces 30, 32 acting substantially below the parting line 28, the reduced load carrying ability does not significantly reduce the usefully life of the main sleeve bearing 20. In contrast, the performance of the sleeve bearings 20 may be compromised by the side relief pockets 34, 36 in 90° V engine blocks. As shown schematically in Fig. 3, a 90° V engine block 40 may have first and second piston banks 42, 44 oriented to form an angle of approximately 90°. The left and right bank piston firing events in the 90° V engine block 40 place more horizontally directed loads 46, 48 on the crankshaft 16 and bearing caps 18 than in the 60° V engine block 10. The loads 46, 48 create greater forces at the parting lines 26 of the main sleeve bearing 20 where less material is provided due to the side relief pockets 34, 36. Even with 60° V engine blocks 10, the design or application of the machine in which the engine is installed, such as a rock crusher where the engine drives a horizontally oriented belt, may create loads having substantial horizontal components acting on the main sleeve bearings 20. As a result of the horizontal loads, the main sleeve bearings 20 can wear down and require replacement more frequently. For these reasons, a need exists for an improved main sleeve bearing providing improved performance in engines and machines applying horizontal loads to the crankshaft at the location of the parting lines in known main sleeve bearings having equal extent bearing half shells.

### Summary of the Invention

In accordance with one embodiment, the present disclosure is directed to a main sleeve bearing for an assembly wherein a journal member is rotatable within a bore. The main sleeve bearing may include a first bearing shell portion and a second bearing shell portion. The first bearing shell portion and the second bearing shell portion may be assembled to form the main sleeve bearing with a circumferential outer surface and an inner bearing surface. The second bearing shell portion may define a greater portion of a circumference of the main sleeve bearing than the first bearing shell portion.

In accordance with another embodiment, the present disclosure is directed to an assembly for rotation of a journal member within a machine. The assembly may include a bearing housing member, a bearing cap member connected to the bearing housing member, and a main sleeve bearing. The bearing housing member and the bearing cap member may define a cylindrical bore, and the main sleeve bearing may be disposed within the cylindrical bore. The main sleeve bearing may include a first bearing shell portion and a second bearing shell portion. The first bearing shell portion and the second bearing shell portion may be assembled to form the main sleeve bearing with a circumferential outer surface and an inner bearing surface. The second bearing shell portion may define a greater portion of a circumference of the main sleeve bearing than the first bearing shell portion.

Additional aspects of the invention are defined by the claims of this patent.

### Brief Description of the Drawings

Fig. 1 is a schematic illustration of a 60° V-shaped engine block;
Fig. 2 is a schematic illustration of a main sleeve bearing having bearing half shells with equal extents;
Fig. 3 is a schematic illustration of a 90° V-shaped engine block;
Fig. 4 is a fragmentary elevational view of an engine block having a main sleeve bearing with bearing shell portions of unequal extent in accordance with the present disclosure;
Fig. 5 is a front elevational view of the main sleeve bearing of Fig. 4;
Fig. 6 is a schematic exploded view of the components of the engine block of Fig. 4;
Fig. 7 is an enlarged fragmentary exploded front elevational view of the main sleeve bearing of Fig. 5;
Fig. 8 is an enlarged fragmentary front elevational view of the main sleeve bearing of Fig. 5 illustrating an alternate parting line configuration; and
Fig. 9 is a fragmentary elevational view of a connecting rod assembly with a sleeve bearing rotated to align with a main load.

### Detailed Description

Although the following text sets forth a detailed description of numerous different embodiments of the invention, it should be understood that the legal scope of the invention is defined by the words of the claims set forth at the end of this patent. The detailed description is to be construed as exemplary only and does not describe every possible embodiment of the invention since describing every possible embodiment would be impractical, if not impossible. Numerous alternative embodiments could be implemented, using either current technology or technology developed after the filing date of this patent, which would still fall within the scope of the claims defining the invention.

It should also be understood that, unless a term is expressly defined in this patent using the sentence "As used herein, the term " " is hereby defined to mean ... " or a similar sentence, there is no intent to limit the meaning of that term, either expressly or by implication, beyond its plain or ordinary meaning, and such term should not be interpreted to be limited in scope based on any statement made in any section of this patent (other than the language of the claims). To the extent that any term recited in the claims at the end of this patent is referred to in this patent in a manner consistent with a single meaning, that is done for sake of clarity only so as to not confuse the reader, and it is not intended that such claim term be limited, by implication or otherwise, to that single meaning.

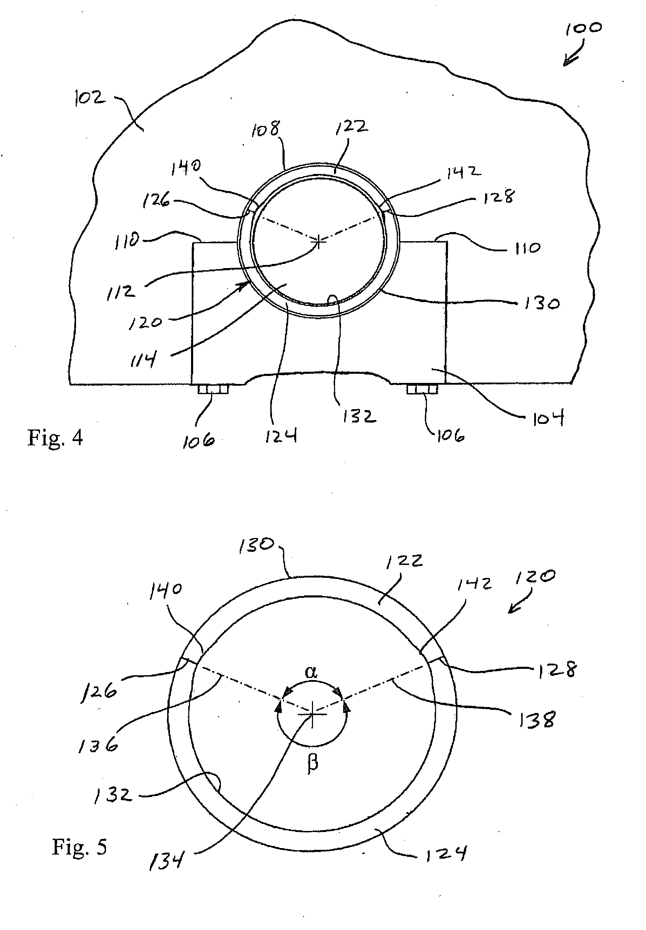

Fig. 4 illustrates a portion of an engine block 100 for an internal combustion engine that may be implement sleeve bearings in accordance with the present disclosure. The engine block 100 may include a crankcase 102 and a lower bearing cap 104 that may be securable to the crankcase 102 by bolts 106 or other attachment mechanism commonly used and known to those skilled in the art. Interior surfaces of the crankcase 102 and the lower bearing cap 104 may define a cylindrical bore 108. Each of the crankcase 102 and the lower bearing cap 104 may define approximately equal 180° portions of the circumference of the bore 108 as demarcated by a parting line 110 that is substantially aligned along a central axis 112 of the bore 108. A journal member, such as a crankshaft 114, may be disposed within the bore 108. Fig. 4 may depict one end of the engine block 100, with the engine block 100 having a similar configuration at the opposite end to provide at least two points of support for the crankshaft 114.

Additional intermediate points of support may be provided there between by additional lower bearing caps 104 and corresponding interior walls of the crankcase 102.

A main sleeve bearing 120 may be disposed within the bore 108 formed by the crankcase 102 and lower bearing cap 104, with the crankshaft 114 being disposed within the main sleeve bearing 120 for rotation. The main sleeve bearing 120 may include a first or upper bearing shell portion 122 and a second or lower bearing shell portion 124 divided along parting lines 126, 128 as will be described more fully below. The bearing shell portions 122, 124 may be fabricated from a single material, such as bronze, or may be bimetal or tri-metal members formed from multiple materials. For example, in one embodiment, the bearing shell portions 122, 124 may include a steel outer layer of generally uniform thickness of approximately 2-3 millimeters (approximately 0.07874 - 0.1181 inch), a bronze clad middle layer with a thickness of approximately 2 millimeters (approximately 0.07874 inch), and a lead-tin overlay inner layer with a thickness of approximately 15 microns (approximately 590.6 microinches). The inner layer may be soft and allow for tilt, taper and slight misalignment of the crankshaft 114. Other combinations of materials from which to fabricate the bearing shell portions 122, 124 will be apparent to those skilled in the art and are contemplated by the inventor as having use in main sleeve bearings 120 in accordance with the present disclosure.

When installed in the engine block 100, the first and second bearing shell portions 122, 124 may define a cylindrical outer surface 130 that may be adapted to fit within and be complimentary to the interior surface of the bore 108, and be generally centered about the central axis 112 of the bore 108. The first bearing shell portion 122 and the second bearing shell portion 124 at the same time may define a generally cylindrical bearing surface 132 around the crankshaft 114. Though illustrated as being generally cylindrical, the bearing surface 132 may have an actual shape adapted to provide desired performance in terms of allowing the crankshaft 114 to rotate therein with optimal lubrication and minimal friction, and efficiently distributing the material of the main sleeve bearing 120 to provide additional material in areas of maximum loading and relatively less material in areas of minimal loading. Consequently, in one embodiment, a horizontal inner diameter of the bearing surface 132 may not be equal to a vertical inner diameter of the bearing surface 132 so that the bearing surface 132 may have a "lemon" shape. In alternate embodiments, a central axis of the bearing surface 132 may be offset from the central axis 112 of the bore 108 and the outer surface 130 in a direction away from the maximum load area of the main sleeve bearing 120 so that the wall of the main sleeve bearing 120 is thicker at the maximum load area. Other geometries for the bearing surface 132 will be apparent to those skilled in the art and may be implemented in main sleeve bearings 120 in accordance with the present disclosure.

Fig. 5 illustrates the main sleeve bearing 120 in greater detail. As discussed above, the outer surface 130 of the main sleeve bearing 120 may be approximately cylindrical, and may have a central axis 134 that may be approximately coincident with the central axis 112 of the bore 108 when the sleeve bearing 120 is disposed therein. In contrast to the known main sleeve bearing 20 of Fig. 2, the main sleeve bearing 120 has the first bearing shell portion 122 and the second bearing shell portion 124 that do not have equal extents and do not define equal portions of the sleeve bearing 120. The parting lines 126, 128 lie along radial lines 136, 138, respectively, extending from the central axis 134. As is apparent from the orientation of the radial lines 136, 138, the parting lines 126, 128 are not collinear with the central axis 134, and the arc lengths of the first bearing shell portion 122 and the second bearing shell portion 124 are not equal.

A first angle α between the radial lines 136, 138 defines the portion of the circumference of the main sleeve bearing 120 defined by the first bearing shell portion 122. A second angle β on the opposite side of the radial lines 136, 138 defines the portion of the circumference of the main sleeve bearing 120 defined by the second bearing shell portion 124. In the illustrated embodiment, the first angle α is less than 180° and is less than the second angle β so that the first bearing shell portion 122 defines less than half of the circumference of the main sleeve bearing 120. Correspondingly, the second angle β is greater than 180° and the second bearing shell portion 124 defines greater than half of the circumference of the sleeve bearing 120. In one embodiment, the first angle α may be within the range of 120° to 160°, with the second angle β having a corresponding value within the range of 200° to 240°. In further alternate embodiments, the first angle α and the second angle β may be within the ranges of 130° to 150° and 210° to 230°, respectively, or 135° to 145° and 215° to 225°, respectively, or may be approximately 140° and 220°, respectively. Of course, other combinations where the first angle α is not equal to the second angle β may be used in main sleeve bearings 120 in accordance with the present disclosure and are contemplated by the inventor.

As discussed above, compensation for misalignment of shell portions at the parting lines may be accommodated by providing relief pockets in the inner surface of the sleeve bearing. Figs. 4 and 5 further illustrate the implementation of relief pockets 140, 142 in the bearing surface 132 of the main sleeve bearing 120 at the parting lines 126, 128, respectively. The relief pockets 140, 142 may be symmetrical about the respective parting lines 126, 128, and may have angular extents along the inner circumference of the bearing surface 132 in the range of approximately 10° to 15°. The relief pockets 140, 142 present areas of reduced thickness of the bearing shell portions 122, 124 disposing the parting lines 126, 128 remotely from the crankshaft 114. The space between the outer surface of the crankshaft 114 and the interior surfaces of the relief pockets 140, 142 may assist in avoiding scraping of lubricant from the surface of the crankshaft 114 by pinched portions of the bearing shell portions 122, 124 at the parting lines 126, 128 or by raised burrs on the bearing surface 132 that may be artifacts of the process for manufacturing the bearing shell portions 122, 124. It is also possible for debris to be present in the lubricant, and the relief pockets 140, 142 provide an area for the debris to wash out of the space between the crankshaft 114 and the bearing surface 132, and avoid being trapped between the crankshaft 114 and the bearing surface 132 and causing undesirable friction and abrasion on the surfaces.

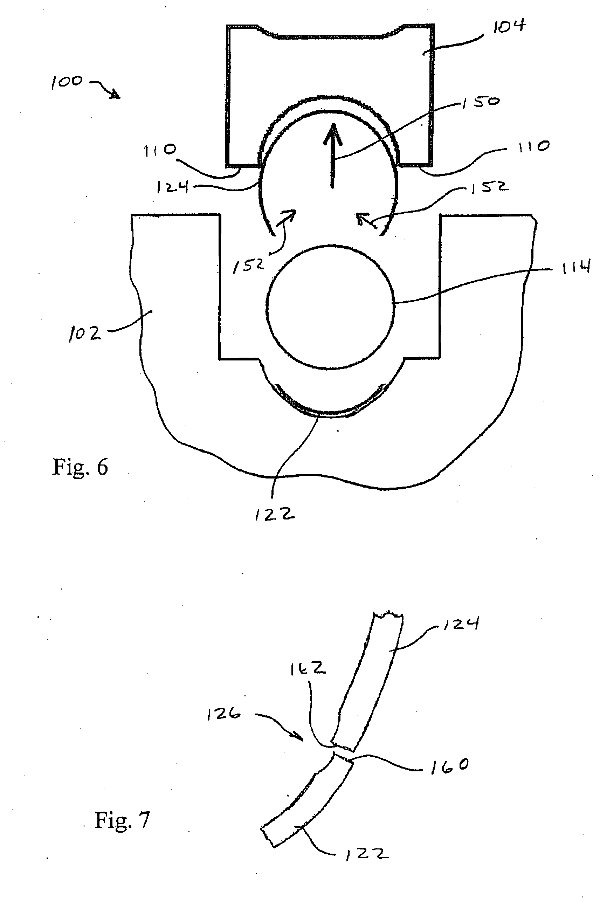

Fig. 6 illustrates a schematic exploded view of the components of the engine block 100 for the purposes of describing the assembly of the components. To facilitate assembly, the crankcase 102 may be inverted so that the portion of the bore 108 defined by the crankcase 102 faces upwardly. After inversion, the first bearing shell portion 122 may be laid upside down in the crankcase 102. The crankshaft 114 may then be dropped down onto the first bearing shell portion 122.

As described above, the second bearing shell portion 124 defines a larger portion of the circumference of the main sleeve bearing 120. The second bearing shell portion 124 may be hand-pressed into the portion of the bore 108 defined by the lower bearing cap 104 as indicated by the arrow 150. The outer diameter of the outer surface 130 of the main sleeve bearing 120 may be equal to or slightly greater than the inner diameter of the bore 108 to provide a tight fit and resist rotation of the sleeve bearing 120 within the bore 108. Due to the tight fit and the components of the main sleeve bearing being bodily deformable, the free ends of the second bearing shell portion 124 may deflect inwardly as indicated by the arrows 152 as the second bearing shell portion 124 is forced into the lower bearing cap 104.

The configuration of the second bearing shell portion 124 and the deflection caused by the insertion into the lower bearing cap 104 may cause the opening between the open ends of the second bearing shell portion 124 to be smaller than the outer diameter of the crankshaft 114. However, due to flexibility of the second bearing shell portion 124 and additional clearance provided by the reduced wall thickness at the relief pockets 140, 142, the second bearing shell portion 124 and the lower bearing cap 104 may be pressed onto the crankshaft 114 with the open ends of the second bearing shell portion 124 deflecting outwardly if necessary to accommodate the crankshaft 114. After the crankshaft 114 is received and the lower bearing cap 104 is in place, the assembly may be completed by applying a bearing crush load and securing the lower bearing cap 104 to the crankcase 102 with the bolts 106 or other appropriate fastening mechanism. As an alternative to the above assembly process, the second bearing shell portion 124 may be pressed on to the crankshaft 114 before the crankshaft 114 is dropped into the crankcase 102. The lower bearing cap 104 may then be pressed down onto the crankshaft 114 and the bearing crush load applied.

The tight fit between the second bearing shell portion 124 and the lower bearing cap 104 may still cause narrowing of the open end of the second bearing shell portion 124 even with the crankshaft 114 disposed therein. In the schematic illustration of Fig. 6, the parting lines 126, 128 are shown as being made along a chord line of the main sleeve bearing 120 as opposed to being collinear with the radial lines 136, 138 as shown in Figs. 4 and 5. In this configuration, where the opening is narrowed, the mating surfaces of the first bearing shell portion 122 may force the ends of the second bearing shell portion 124 further inwardly to cause a greater misalignment of the ends of the bearing shell portions 122, 124 when the crush load is applied. The misalignment may at least partially be corrected by the radial configuration of the parting lines 126, 128 shown in Figs. 4 and 5. As shown in the enlarged partial section of Fig. 7, the first bearing shell portion 122 may have a first parting line surface 160 and the second bearing shell portion 124 may have a second parting line surface 162 that face and engage at the parting line 126. Similar surfaces may face and engage at the opposite parting line 128. As shown, the second parting line surface 162 may be disposed inwardly of the first parting line surface 160 due to deflection in the second bearing shell portion 124. As the second bearing shell portion 124 and lower bearing cap 104 move downward toward the crankcase 102, the first parting line surface 160 engages the second parting line surface 162 in a manner that may cause the side of the second bearing shell portion 124 to deflect outwardly due to the generally wedge-shaped configuration of the first parting line surface 160 when the crush load is applied. The deflection may assist in causing the outer surface 130 of the sleeve bearing 120 to conform to the shape of the bore 108.

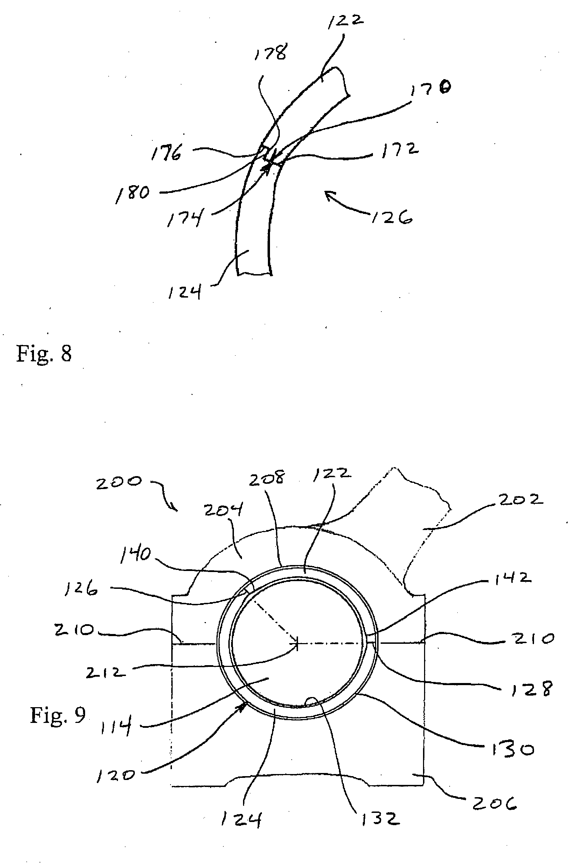

Fig. 8 illustrates a further alternative embodiment for the parting lines 126, 128 of the main sleeve bearing 120 that may assist in aligning the mating surfaces by providing positive engagement there between. In the illustrated embodiment, the first bearing shell portion 122 may have a first parting line surface 170 having an inner key shoulder 172 at the bearing surface 132 that extends along the axial length of the first parting line surface 170 and has a thickness that is less than the thickness of the main sleeve bearing 120 at the parting line 126. The second bearing shell portion 124 may have a second parting line surface 174 having a corresponding outer key shoulder 176 at the outer surface 130 that extends along the axial length of the second parting line surface 174 and has a thickness that is less than the thickness of the main sleeve bearing 120 at the parting line 126 such that the combined thicknesses of the key shoulders 172, 176 is approximately equal to the thickness of the main sleeve bearing 120 at the parting line 126. Similar surfaces and shoulders are provided at the parting line 128.

During the assembly process, the second bearing shell portion 124 may mate with the first bearing shell portion 122 with the key shoulders 172, 176 overlapping as shown in Fig. 8, and with an outer wall 178 of the inner key shoulder 172 facing and engaging an inner wall 180 of the outer key shoulder 176. Once installed with the lower bearing cap 104 lowered onto the crankcase 102, the crush load may be applied. As the bearing shell portions 122, 124 are crushed downward, the bearing shell portions 122, 124 deflect outward as the outer wall 178 presses outwardly on the inner wall 180 to form the cylindrical shape of the outer surface 130 of the main sleeve bearing 120. After the assembly of the engine block 100, the bearing shell portions 122, 124 may both be fully in compression at the outer surface 130 and at the bearing surface 132 in preparation for the main loads applied to the crankshaft.

Those skilled in the art will understand that the surfaces at the parting lines 126, 128 may have other configurations wherein the surfaces of the first bearing shell portion 122 engage the corresponding surfaces of the second bearing shell portion 124 to force the ends of the second bearing shell portion 124 outwardly when the crush load is applied. For example, one of the engaging surfaces may have a convex shape that is received by a complimentary concave-shaped surface. Alternatively, one of the surfaces may define a longitudinally extending slot that receives a corresponding longitudinal rib of the opposite surface. As a further alternative, the surfaces may have a series of complimentary undulations that overlap when the ends of the bearing shell portions 122, 124 are aligned. Additional alternative overlapping surfaces will be apparent to those skilled in the art and are contemplated by the inventor as having use in sleeve bearings 120 in accordance with the present disclosure.

### Industrial Applicability

The disclosed main sleeve bearings 120 may be provided in any machine or engine to absorb main loads applied by the pistons or other apparatus attached to the crankshaft 114. In particular, the main sleeve bearings 120 may have application in 90° V engine blocks 40 or other engine blocks subjected to loads having significant horizontal components and acting at least partially above the parting lines 110. For example, as shown in Fig. 3, the main loads 46, 48 in the 90° V engine block 40 can act on portions of the main sleeve bearing 120 above the parting line 28. Previously known main sleeve bearings 20 having bearing half shells 22, 24 of equal extents would have such main loads 46, 48 applied at the parting lines 26 where less material is provided. In contrast, the parting lines 126, 128 of the present main sleeve bearings 120 are disposed above the portions of the second bearing shell portion 124 that are acted upon by the main loads 46, 48 of the 90° V engine blocks 40. Consequently, the main loads 46, 48 are not acting at the parting lines 126, 128 or on thinner portions of the main sleeve bearings 120, thereby prolonging the useful life of the main sleeve bearings 120 to the present disclosure.

As shown in Figs. 4-6, the bearing shell portions 122, 124 may be installed within the bore 108 of the engine block 100 generally symmetrically with respect to the parting lines 110 of the engine block 100. This orientation may facilitate assembly where the components of the engine block 100 may be vertically aligned as shown in the exploded view of Fig. 6. However, it may be possible to further isolate the parting lines 126, 128 from the main loads 46, 48 generated by the piston banks 42, 44 by rotating the bearing shell portions 122, 124. This may be particularly desirable in connector rod assemblies where sleeve bearings having shell portions of unequal extents may be implemented. Fig. 9 illustrates connector rod assembly 200 in which the sleeve bearing 120 may be implemented. The connector rod assembly 200 may include an elongated rod 202 having one end connected to a piston (not shown), and the opposite end connected to an integrally formed bearing housing 204. A bearing cap 206 may be securable to the bearing housing 204 by bolts or other attachment mechanism (not shown) commonly used and known to those skilled in the art. Interior surfaces of the bearing housing 204 and bearing cap 206 may define a cylindrical bore 208. Each of the bearing housing 204 and the bearing cap 206 may define approximately equal 180° portions of the circumference of the bore 208 as demarcated by a parting line 210 that is substantially aligned along a central axis 212 of the bore 208.

A main load such as the main load 46 of Fig. 3 is applied to a portion of the crankshaft 114 disposed within the connector rod assembly 200 and to the sleeve bearing 120 by the elongated rod 202. The main load 46 may act in part above the parting line 210 on the left side of the assembly 200, and below the parting line 210 on the right side. As shown in Fig. 9, the second bearing shell portion 124 may be rotated clockwise to align the parting line 128 with the parting line 210 on the right side of the assembly 200. The rotation correspondingly rotates the parting line 126 away from the parting line 210 on the left side of the connector rod assembly 200, and to a location that is further removed from the main load 46. Depending on the characteristics of the main loads applied to the connector rod assembly 200 in a given operating environment, the sleeve bearing 120 may be rotated to other positions to most effectively withstand the forces and protect the crankshaft 114 during the operation of the engine.

The main sleeve bearing 120 has been illustrated and described herein as being implemented as a main bearing for a crankshaft in the crankcase of an engine block, and as a sleeve bearing in a connector rod assembly. Those skilled in the art will understand that the main sleeve bearing may be implemented in other machines and environments wherein a bearing housing member and a bearing cap member may be connected together and have interior surfaces defining a cylindrical bore for receiving a journal member therein. The main sleeve bearing 120 may be provided within the bore and around the journal member to facilitate rotation of the journal member within the bore with reduced friction and wear.

While the preceding text sets forth a detailed description of numerous different embodiments of the invention, it should be understood that the legal scope of the invention is defined by the words of the claims set forth at the end of this patent. The detailed description is to be construed as exemplary only and does not describe every possible embodiment of the invention since describing every possible embodiment would be impractical, not impossible. Numerous alternative embodiments could be implemented, using either current technology or technology developed after the filing date of this patent, which would still fall within the scope of the claims defining the invention.

## Claims

1. A main sleeve bearing (120) for an assembly (100)
wherein a journal member (114) is rotatable within a bore (108), comprising:
a first bearing shell portion (122); and
a second bearing shell portion (124), the first bearing shell portion (122) and the second bearing shell portion (124) assembled to form the main sleeve bearing (120) with a circumferential outer surface (130) and an inner bearing surface (132),
wherein the second bearing shell portion (124) defines a greater portion of a circumference of the main sleeve bearing (120) than the first bearing shell portion (122).

2. The main sleeve bearing (120) of claim 1, wherein the main sleeve bearing (120) has a central axis (134), wherein corresponding ends of the first bearing shell portion (122) and the second bearing shell portion (124) meet and engage at a first parting line (126) and a second parting line (128), wherein a first radial line (136) extends from the central axis (134) to the first parting line (126) and a second radial line (138) extends from the central axis (134) to the second parting line (128), wherein a first angle (α) between the first and second radial lines (136, 138) defines a first portion of the circumference of the main sleeve bearing (120) defined by the first bearing shell portion (122) and a second angle (β) between the first and second radial lines (136, 138) defines a second portion of the circumference of the main sleeve bearing (120) defined by the second bearing shell portion (124), and wherein the second angle (β) is greater than the first angle (α).

3. The main sleeve bearing (120) of claim 2, wherein the second angle (β) has a value in the range of 200° to 240° and the first angle (α) has a value in the range of 120° to 160°.

4. The main sleeve bearing (120) of claim 2, wherein the second angle (β) has a value in the range of 210° to 230° and the first angle (α) has a value in the range of 130° to 150°.

5. The main sleeve bearing (120) of claim 2, wherein the second angle (β) has a value in the range of 215° to 225° and the first angle (α) has a value in the range of 135° to 145°.

6. The main sleeve bearing (120) of claim 2, wherein the second angle (β) has a value of approximately 220° and the first angle (α) has a value of approximately 140°.

7. The main sleeve bearing (120) of claim 2, wherein the first parting line (126) and the second parting line (128) are collinear with a chord line of the main sleeve bearing (120).

8. The main sleeve bearing (120) of claim 2, wherein the first parting line (126) is collinear with the first radial line (136) and the second parting line (128) is collinear with the second radial line (138).

9. The main sleeve bearing (120) of claim 2, wherein the first and second bearing shell portions (122, 124) have engaging surfaces (160, 162) at the first and second parting lines (126, 128), and wherein engagement of the engaging surfaces (160, 162) causes the first bearing shell portion (122) to force ends of the second bearing shell portion (124) outwardly when a downward load in the direction of the second bearing shell portion (124) is applied to the first bearing shell portion (122).

10. The main sleeve bearing (120) of claim 9, wherein at each parting line (126, 128) the first bearing shell portion (122) has a first parting line surface (170) having an inner key shoulder (172) extending along an axial length of the parting line (126, 128) proximate the inner bearing surface (132) of the main sleeve bearing (120), and the second bearing shell portion (124) has a second parting line surface (174) having an outer key shoulder (176) extending along the axial length of the parting line (126, 128) proximate the outer surface (130) of the main sleeve bearing (120), wherein the inner key shoulder (172) and the outer key shoulder (176) overlap when the first bearing shell portion (122) is attached to the second bearing shell portion (124).

11. The main sleeve bearing (120) of claim 1 in combination with an assembly (100, 200) for rotation of a journal member (114) within a machine, the assembly (100, 200) comprising :
a bearing housing member (102, 204); and
a bearing cap member (104, 206) connected to the bearing housing member (102, 204), wherein the bearing housing member (102, 204) and the bearing cap member (104, 206) define a cylindrical bore (108, 208), and wherein the main sleeve bearing (120) is disposed within the cylindrical bore (108, 208).

12. The main sleeve bearing (120) and assembly (100) of claim 11, wherein the cylindrical bore (108) and the main sleeve bearing (120) have a collinear central axis (112, 134), wherein corresponding ends of the first bearing shell portion (122) and the second bearing shell portion (124) meet and engage at a first sleeve bearing parting line (126) and a second sleeve bearing parting line (128), wherein a first radial line (136) extends from the central axis (134) to the first sleeve bearing parting line (126) and a second radial line (138) extends from the central axis (134) to the second sleeve bearing parting line (128), wherein a first angle (α) between the first and second radial lines (136, 138) defines a first portion of the circumference of the main sleeve bearing (120) defined by the first bearing shell portion (122) and a second angle (β) between the first and second radial lines (136, 138) defines a second portion of the circumference of the main sleeve bearing (120) defined by the second bearing shell portion (124), and wherein the second angle (β) is greater than the first angle (α).

13. The main sleeve bearing (120) and assembly (100) of claim 12, wherein corresponding ends of the bearing housing member (102) and the bearing cap member (104) meet and engage at a first assembly parting line (110) and a second assembly parting line (110), wherein neither of the first or second sleeve bearing parting lines (126, 128) are collinear with either the first or second assembly parting lines (110).

14. The main sleeve bearing (120) and assembly (200) of claim 12, wherein corresponding ends of the bearing housing member (204) and the bearing cap member (206) meet and engage at a first assembly parting line (210) and a second assembly parting line (210), wherein one of the first or second sleeve bearing parting lines (126, 128) is collinear with one of the first or second assembly parting lines (210).

## Patentansprüche

1. Hauptgleitlager (120) für eine Baugruppe (100), in der ein Lagerelement (114) in einer Bohrung (108) drehbar ist, mit:
einem ersten Lagerschalenabschnitt (122), und
einem zweiten Lagerschalenabschnitt (124), wobei der erste Lagerschalenabschnitt (122) und der zweite Lagerschalenabschnitt (124) zusammengesetzt das Hauptgleitlager (120) mit einer äußeren Umfangsfläche (130) und einer inneren Lagerfläche (132) bilden,
wobei der zweite Lagerschalenabschnitt (124) einen größeren Umfangsabschnitt des Hauptgleitlagers (120) festlegt als der erste Lagerschalenabschnitt (122).

2. Hauptgleitlager (120) nach Anspruch 1, wobei das Hauptgleitlager (120) eine Mittelachse (134) aufweist, sich entsprechende Enden des ersten Lagerschalenabschnitts (122) und des zweiten Lagerschalenabschnitts (124) an einer ersten Trennfuge (126) und an einer zweiten Trennfuge (128) berühren und ineinander greifen, sich eine erste Radiallinie (136) von der Mittelachse (134) zur ersten Trennfuge (126) erstreckt und sich eine zweite Radiallinie (138) von der Mittelachse (134) zur zweiten Trennfuge (128) erstreckt, ein erster Winkel (α) zwischen der ersten und zweiten Radiallinie (136, 138) einen durch den ersten Lagerschalenabschnitt (122) festgelegten ersten Umfangsabschnitt des Hauptgleitlagers (120) definiert und ein zweiter Winkel (β) zwischen der ersten und zweiten Radiallinie (136, 138) einen durch den zweiten Lagerschalenabschnitt (124) festgelegten zweiten Umfangsabschnitt des Hauptgleitlagers (120) definiert, und wobei der zweite Winkel (β) größer ist als der erste Winkel (α).

3. Hauptgleitlager (120) nach Anspruch 2, wobei der zweite Winkel (β) einen Wert im Bereich von 200° bis 240° und der erste Winkel (α) einen Wert im Bereich von 120° bis 160° aufweist.

4. Hauptgleitlager (120) nach Anspruch 2, wobei der zweite Winkel (β) einen Wert im Bereich von 210° bis 230° und der erste Winkel (α) einen Wert im Bereich von 130° bis 150° aufweist.

5. Hauptgleitlager (120) nach Anspruch 2, wobei der zweite Winkel (β) einen Wert im Bereich von 215° bis 225° und der erste Winkel (α) einen Wert im Bereich von 135° bis 145° aufweist.

6. Hauptgleitlager (120) nach Anspruch 2, wobei der zweite Winkel (β) einen Wert von ungefähr 220° und der erste Winkel (α) einen Wert von ungefähr 140° aufweist.

7. Hauptgleitlager (120) nach Anspruch 2, wobei die erste Trennfuge (126) und die zweite Trennfuge (128) kollinear zu einer Sehnenlinie des Hauptgleitlagers (120) sind.

8. Hauptgleitlager (120) nach Anspruch 2, wobei die erste Trennfuge (126) kollinear zur ersten Radiallinie (136) ist und die zweite Trennfuge (128) kollinear zur zweiten Radiallinie (138) ist.

9. Hauptgleitlager (120) nach Anspruch 2, wobei die ersten und zweiten Lagerschalenabschnitte (122, 124) an den ersten und zweiten Trennfugen (126, 128) Eingriffsflächen (160, 162) aufweisen, und wobei ein Ineinandergreifen der Eingriffsflächen (160, 162) dazu führt, dass der erste Lagerschalenabschnitt (122) Enden des zweiten Lagerschalenabschnitts (124) nach außen drängt, wenn auf den ersten Lagerschalenabschnitt (122) eine nach unten in Richtung des zweiten Lagerschalenabschnitts (124) gerichtete Kraft ausgeübt wird.

10. Hauptgleitlager (120) nach Anspruch 9, wobei an jeder Trennfuge (126, 128) der erste Lagerschalenabschnitt (122) eine erste Trennfugenfläche (170) mit einer sich entlang einer axialen Länge der Trennfuge (126, 128) erstreckenden inneren Passschulter (172) in der Nähe der inneren Lagerfläche (132) des Hauptgleitlagers (120) aufweist, und der zweite Lagerschalenabschnitt (124) eine zweite Trennfugenfläche (174) mit einer sich entlang der axialen Länge der Trennfuge (126, 128) erstreckenden äußeren Passschulter (176) in der Nähe der äußeren Fläche (130) des Hauptgleitlagers (120) aufweist, wobei die innere Passschulter (172) und die äußere Passschulter (176) überlappen, wenn der erste Lagerschalenabschnitt (122) mit dem zweiten Lagerschalenabschnitt (124) verbunden ist.

11. Hauptgleitlager (120) nach Anspruch 1 in Kombination mit einer Baugruppe (100, 200) zur Rotation eines Lagerelementes (114) in einer Maschine, wobei die Baugruppe (100, 200) aufweist:
ein Lagergehäuseelement (102, 204), und
ein mit dem Lagergehäuseelement (102, 204) verbundenes Lagerdeckelelement (104, 206), wobei das Lagergehäuseelement (102, 204) und das Lagerdeckelelement (104, 206) eine zylindrische Bohrung (108, 208) definieren, und das Hauptgleitlager (120) in der zylindrischen Bohrung (108, 208) angeordnet ist.

12. Hauptgleitlager (120) und Baugruppe (100) nach Anspruch 11, wobei die zylindrische Bohrung (108) und das Hauptgleitlager (120) eine kollineare Mittelachse (112, 134) aufweisen, sich entsprechende Enden des ersten Lagerschalenabschnitts (122) und des zweiten Lagerschalenabschnitts (124) an einer ersten Gleitlagertrennfuge (126) und einer zweiten Gleitlagertrennfuge (128) berühren und ineinander greifen, sich eine erste Radiallinie (136) von der Mittelachse (134) zur ersten Gleitlagertrennfuge (126) erstreckt und sich eine zweite Radiallinie (138) von der Mittelachse (134) zur zweiten Gleitlagertrennfuge (128) erstreckt, ein erster Winkel (α) zwischen der ersten und zweiten Radiallinie (136, 138) einen durch den ersten Lagerschalenabschnitt (122) festgelegten ersten Umfangsabschnitt des Hauptgleitlagers (120) definiert und ein zweiter Winkel (β) zwischen der ersten und zweiten Radiallinie (136, 138) einen durch den zweiten Lagerschalenabschnitt (124) festgelegten zweiten Umfangsabschnitt des Hauptgleitlagers (120) definiert, und wobei der zweite Winkel (β) größer ist als der erste Winkel (α).

13. Hauptgleitlager (120) und Baugruppe (100) nach Anspruch 12, wobei sich entsprechende Enden des Lagergehäuseelementes (102) und des Lagerdeckelelementes (104) an einer ersten Baugruppentrennfuge (110) und einer zweiten Baugruppentrennfuge (110) berühren und ineinander greifen, wobei keine der ersten und zweiten Gleitlagertrennfugen (126, 128) zu keiner der ersten und zweiten Baugruppentrennfugen (110) kollinear ist.

14. Hauptgleitlager (120) und Baugruppe (200) nach Anspruch 12, wobei sich entsprechende Enden des Lagergehäuseelementes (204) und des Lagerdeckelelementes (206) an einer ersten Baugruppentrennfuge (210) und einer zweiten Baugruppentrennfuge (210) berühren und ineinander greifen, wobei die erste oder zweite Gleitlagertrennfuge (126, 128) kollinear zur ersten oder zweiten Baugruppentrennfuge (210) ist.

## Revendications

1. Palier à coussinet-douille principal (120) destiné à un assemblage (100) dans lequel un élément formant tourillon (114) peut tourner à l'intérieur d'un alésage (108), comprenant :
une première partie formant coquille de coussinet (122) ; et
une seconde partie formant coquille de coussinet (124), la première partie formant coquille de coussinet (122) et la seconde partie formant coquille de coussinet (124) étant assemblées pour former le palier à coussinet-douille principal (120) présentant une surface extérieure circonférentielle (130) et une surface intérieure de palier (132),
dans lequel la seconde partie formant coquille de coussinet (124) définit une plus grande partie de circonférence du palier à coussinet-douille principal (120) que la première partie formant coquille de coussinet (122).

2. Palier à coussinet-douille principal (120) selon la revendication 1, dans lequel le palier à coussinet-douille principal (120) a un axe central (134), dans lequel des extrémités correspondantes de la première partie formant coquille de coussinet (122) et de la seconde partie formant coquille de coussinet (124) se rencontrent et coopèrent au niveau d'une première ligne de joint (126) et d'une seconde ligne de joint (128), dans lequel une première ligne radiale (136) s'étend de l'axe central (134) à la première ligne de joint (126) et une seconde ligne radiale (138) s'étend de l'axe central (134) à la seconde ligne de joint (128), dans lequel un premier angle (α) entre les première et seconde lignes radiales (136, 138) définit une première partie de la circonférence du palier à coussinet-douille principal (120), définie par la première partie formant coquille de coussinet (122) et un second angle (ß) entre les première et seconde lignes radiales (136, 138) définit une seconde partie de la circonférence du palier à coussinet-douille principal (120), définie par la seconde partie formant coquille de coussinet (124), et dans lequel le second angle (ß) est supérieur au premier angle (α).

3. Palier à coussinet-douille principal (120) selon la revendication 2, dans lequel le second angle (ß) a une valeur se situant dans la plage de 200° à 240° et le premier angle (α) a une valeur se situant dans la plage de 120° à 160°.

4. Palier à coussinet-douille principal (120) selon la revendication 2, dans lequel le second angle (ß) a une valeur se situant dans la plage de 210° à 230° et le premier angle (α) a une valeur se situant dans la plage de 130° à 150°.

5. Palier à coussinet-douille principal (120) selon la revendication 2, dans lequel le second angle (ß) a une valeur se situant dans la plage de 215° à 225° et le premier angle (α) a une valeur se situant dans la plage de 135° à 145°.

6. Palier à coussinet-douille principal (120) selon la revendication dans lequel le second angle (ß) a une valeur d'environ 220° et le premier angle (α) a une valeur d'environ 140°.

7. Palier à coussinet-douille principal (120) selon la revendication 2, dans lequel la première ligne de joint (126) et la seconde ligne de joint (128) sont colinéaires avec une ligne de corde du palier à coussinet-douille principal (120).

8. Palier à coussinet-douille principal (120) selon la revendication 2, dans lequel la première ligne de joint (126) est colinéaire avec la première ligne radiale (136) et la seconde ligne de joint (128) est colinéaire avec la seconde ligne radiale (138).

9. Palier à coussinet-douille principal (120) selon la revendication 2, dans lequel les première et seconde parties formant coquilles de coussinet (122, 124) ont des surfaces de coopération (160, 162) au niveau des première et seconde lignes de joint (126, 128), et dans lequel la coopération des surfaces de coopération (160, 162) fait que la première partie formant coquille de coussinet (122) pousse des extrémités de la seconde partie formant coquille de coussinet (124) vers l'extérieur, lorsqu'une charge vers le bas en direction de la seconde partie formant coquille de coussinet (124) est appliquée à la première partie formant coquille de coussinet (122).

10. Palier à coussinet-douille principal (120) selon la revendication 9, dans lequel au niveau de chaque ligne de joint (126, 128), la première partie formant coquille de coussinet (122) présente une première surface de ligne de joint (170) présentant un épaulement intérieur de clavette (172) s'étendant le long d'une longueur axiale de la ligne de joint (126, 128) à proximité de la surface intérieure de palier (132) du palier à coussinet-douille principal (120), et la seconde partie formant coquille de coussinet (124) présente une seconde surface de ligne de joint (174) présentant un épaulement extérieur de clavette (176) s'étendant le long de la longueur axiale de la ligne de joint (126, 128) à proximité de la surface extérieure (130) du palier à coussinet-douille principal (120), dans lequel l'épaulement intérieur de clavette (172) et l'épaulement extérieur de clavette (176) se chevauchent lorsque la première partie formant coquille de coussinet (122) est fixée à la seconde partie formant coquille de coussinet (124).

11. Palier à coussinet-douille principal (120) selon la revendication 1 en combinaison avec un assemblage (100, 200) destiné à la rotation d'un élément formant tourillon (114) à l'intérieur d'une machine, l'assemblage (100, 200) comprenant :
un élément formant logement de palier (102, 204) ; et
un élément formant chapeau de palier (104, 206) relié à l'élément formant logement de palier (102, 204), dans lequel l'élément formant logement de palier (102, 204) et l'élément formant chapeau de palier (104, 206) définissent un alésage cylindrique (108, 208), et dans lequel le palier à coussinet-douille principal (120) est disposé à l'intérieur de l'alésage cylindrique (108, 208).

12. Palier à coussinet-douille principal (120) et assemblage (100) selon la revendication 11, dans lesquels l'alésage cylindrique (108) et le palier à coussinet-douille principal (120) ont un axe central colinéaire (112, 134), dans lesquels des extrémités correspondantes de la première partie formant coquille de coussinet (122) et de la seconde partie formant coquille de coussinet (124) se rencontrent et coopèrent au niveau d'une première ligne de joint du palier à coussinet-douille (126) et d'une seconde ligne de joint du palier à coussinet-douille (128), dans lesquels une première ligne radiale (136) s'étend de l'axe central (134) à la première ligne de joint du palier à coussinet-douille (126) et une seconde ligne radiale (138) s'étend de l'axe central (134) à la seconde ligne de joint du palier à coussinet-douille (128), dans lesquels un premier angle (α) entre les première et seconde lignes radiales (136, 138) définit une première partie de la circonférence du palier à coussinet-douille principal (120), définie par la première partie formant coquille de coussinet (122) et un second angle (ß) entre les première et seconde lignes radiales (136, 138) définit une seconde partie de la circonférence du palier à coussinet-douille principal (120), définie par la seconde partie formant coquille de coussinet (124), et dans lesquels le second angle (ß) est supérieur au premier angle (α).

13. Palier à coussinet-douille principal (120) et assemblage (100) selon la revendication 12, dans lesquels des extrémités correspondantes de l'élément formant logement de palier (102) et de l'élément formant chapeau de palier (104) se rencontrent et coopèrent au niveau d'une première ligne de joint de l'assemblage (110) et d'une seconde ligne de joint de l'assemblage (110), dans lesquels aucune des première et seconde lignes de joint du palier à coussinet-douille (126, 128) n'est colinéaire avec l'une ou l'autre des première et seconde lignes de joint de l'assemblage (110).

14. Palier à coussinet-douille principal (120) et assemblage (200) selon la revendication 12, dans lesquels des extrémités correspondantes de l'élément formant logement de palier (204) et de l'élément formant chapeau de palier (206) se rencontrent et coopèrent au niveau d'une première ligne de joint de l'assemblage (210) et d'une seconde ligne de joint de l'assemblage (210), dans lesquels l'une des première et seconde lignes de joint du palier à coussinet-douille (126, 128) est colinéaire avec l'une des première et seconde lignes de joint de l'assemblage (210).
